# EUROPEAN PATENT SPECIFICATION

(11) **EP 0 430 499 B1**
(45) Date of publication and mention of the grant of the patent: **10.04.1996**
(21) Application number: 90312469.1
(22) Date of filing: 15.11.1990
(51) Int. Cl.: B26F 1/00, B26D 3/10, B26F 1/38

(54) **Method and apparatus for manufacturing sheets**
Vorrichtung und Verfahren zum Herstellen von Folien
Procédé et dispositif de fabrication de feuilles

(30) Priority: 22.11.1989 JP 302230/89
(43) Date of publication of application: 05.06.1991
(73) Proprietor: NIPPON PETROCHEMICALS COMPANY, LIMITED, Tokyo (JP)
(72) Inventor: Totsuka, Akio, Chiba-ken (JP)
(74) Representative: Thomson, Paul Anthony

(56) References cited:
- DE-A- 1 944 464
- GB-A- 2 182 596
- GB-A- 2 219 235
- US-A- 3 000 430

## Description

### 1. Field of the Invention

This invention relates to a method and an apparatus for manufacturing sheets, such as synthetic resin-made sheet pallets used to mount goods thereon for transport and storage, and tier sheets used to be inserted in a stack of containers every tier of container when the containers are stacked in many tiers for unitization.

### 2. Prior Art

Various sheets have heretofore been used for various purposes. Such sheets include pallets made of a synthetic resin. The pallets made from a synthetic resin are light in weight and small in size as compared with pallets made of wood, and the former are excellent in loading and storing efficiency. Therefore, the pallets made from sheets of synthetic resin have been widely used.

The prior art pallet made from a sheet of synthetic resin is rectangular in shape. Each corner part of the pallet is circularly arcuate in shape. In the vicinity of one side edge of the surface of the pallet, a ruled line (for example, an elongate recess) is formed. The elongate recess is parallel to the one side edge. The elongate recess is a recessed groove, which is used for bending upwardly the portion of the sheet, defined by the groove and the one side edge, to form a tab portion. A load is laid on the top surface of the pallet. In a push-pull apparatus or the like, the pallet loaded thereon with goods is pulled up onto a platen with the tab portion being held, for transporting the goods.

The pallet of this kind has been manufactured by a punching machine for corrugated cardboards, such as disclosed for instance, in Japanese Patent Appln. Laid-Open Gazette No. 85933/1985 (GB-A-2 144 067). The shape of knife-edge of the punching machine has been conformed to the shape of the pallet. The prior art punching machine for the sheet pallet has a lower die the top surface of which is flat, and an upper die. The upper die is provided, on the lower side, with a rectangular frame-shaped knife-edge body which matches the external shape of the pallet, and is also provided with a press piece for forming the elongate recess. The sheet pallets have conventionally been formed by punching a sheet material to obtain sheet pallet blanks and then pressing the blanks by this prior art punching machine.

As stated above, the pallets have usually been formed by the rectangular frame-shaped knife-edge body which matches with the external shape of the pallet. Therefore, the sheet material is naturally a little larger than the pallet to be formed. Accordingly, the yield of products is low and this is disadvantageous from the view point of the cost of products.
Since the knife-edge body has a rectangular frame-like shape and it occupies a large space accordingly, the machine used must be of large size.

### SUMMARY OF THE INVENTION

An object of the present invention is to provide a method and an apparatus which enable the automatic and successive production of sheets such as pallets or tier sheets.

Another object of the present invention is to provide a method and an apparatus which permit to improve the yield of products and reduction of the manufacturing cost.

Still another object of the present invention is to provide a method of manufacturing pallets which allows the use of a small sized or compact apparatus for carrying out the method, and also to provide the small sized apparatus.

According to the present invention there is provided a method of manufacturing pallets from a plurality of sheets, said sheets having a predetermined polygonal shape and dimensions substantially the same as the dimensions of the pallets to be manufactured, said plurality of sheets comprising a first sheet having a rear side, a second sheet having a front side and at least a third sheet, characterised in that the method comprises:
a first step of substantially cutting at the same time both rear corner portions of said first sheet positioned in a first area, said first area having one side, said rear corner portions of said first sheet facing one side of a second area, and the front corner portions of said second sheet positioned in said second area, said front corner portions of said second sheet facing said one side of said first area; and
a second step of conveying said first sheet from said first area to a discharging area, conveying said second sheet from said second area to said first area, and conveying said third sheet from a feeding area to said second area.

Further in accordance with the present invention there is provided an apparatus for manufacturing pallets characterised in that the apparatus comprises:
a) conveying means for conveying a first sheet and a second sheet in sequence from a feeding position to a second discharging position, said first sheet having a rear side and said second sheet having a front side;
b) positioning means for positioning said first sheet and said second sheet in such a manner that the rear side of said first sheet and the front side of said second sheet face each other at a a position adjacent to a predetermined cutting position, said positioning means being located between said feeding position and said discharging position;
c) cutting means for cutting substantially at the same time the corner portions of the rear side of said first sheet and the corner portions of the front side of said second sheet.

In the method for manufacturing sheets and the apparatus therefor according to the present invention, only the corner portions of the sheet material are cut off, while the sheet material is not cut along its entire periphery. Besides, a plurality of corner portions of the preceding and the sheet materials which are fed sequentially are cut under such conditions that these sheet materials are set in proximity to each other. In addition, cutting of the corner portions and formation of the groove are effected at the same time. Furthermore, the corner portions and the like of sheet materials are machined in the course of conveyance of the sheet materials.

### BRIEF DESCRIPTION OF THE DRAWINGS

Fig. 1 is a plan view of the first embodiment of an apparatus of the present invention:
Fig. 2 is a side view of the longitudinal section of a principal part taken along the line X -X of Fig. 1;
Fig. 3 is a side view of the longitudinal section of the principal part taken along the line Y - Y in Fig. 1;
Fig. 4 is a right side view of the longitudinal section of the center of a die;
Fig. 5 is a horizontal plan view of the longitudinal section of a principal part taken along the line Z - Z in Fig. 4;
Fig. 6 is a plan view of a pallet P punched by the apparatus of Fig. 1;
Fig. 7 is a right side view of the longitudinal section of the center of a die of an apparatus according to a second embodiment of the present invention; and
Fig. 8 is a horizontal plan view of the longitudinal section of the principal part taken along the line Z - Z in Fig. 7.

### DESCRIPTION OF THE PREFERRED EMBODIMENTS

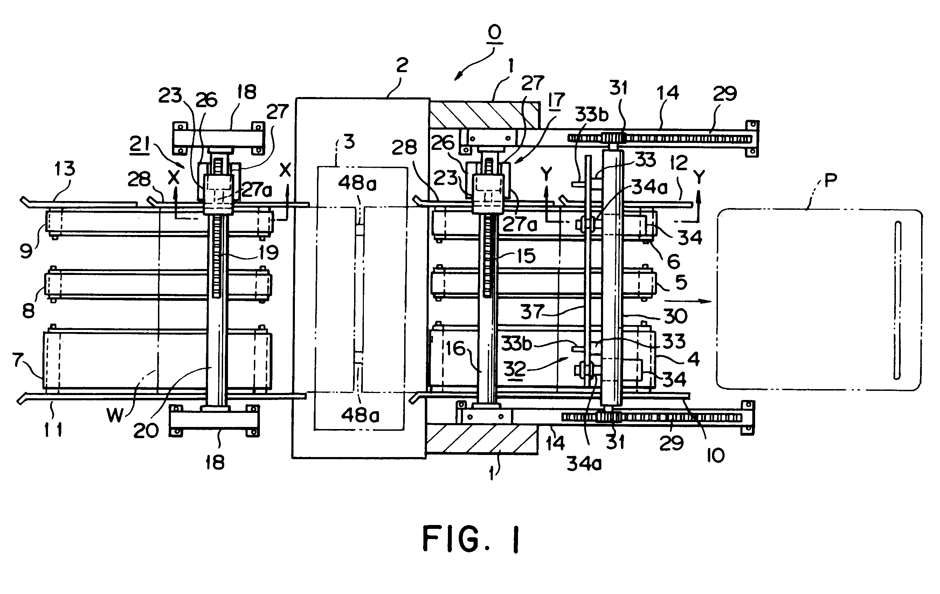

The embodiments of this invention will be described hereinbelow with reference to Figs. 1 to 8.

In Fig. 1, numerals 1, 1 designate the frame of a machining apparatus 0, and numeral 2 designates the table of the machining apparatus 0. The upper and lower dies 3, details of which will be described later, are set on the table 2.

A sheet material W is conveyed from the left side of the figure to the right side, during which the sheet material is formed into a sheet. The side toward which the sheet is conveyed, the right side of the figure and the downstream side is called the front side, while the side opposite to the above, i.e. the left side of the figure and the upstream side is called the rear side.

On the rear side of the table 2, i.e. on the left side of the figure, three belt conveyors, 7, 8, 9 are the feeding means for feeding the sheet material. On the front side of the table 2, i.e. on the right side of the figure, three belt conveyors, 4, 5, 6 are the discharging means for discharging the sheet. The respective top surfaces of the belt conveyors, 4, 5, 6, 7, 8, 9 are substantially flush with the surface of the dies 3.

The conveyors, 5, 6, 8 and 9 which are narrower than belt conveyors 4 and 7 are so designed that they can be shifted laterally, that is, onto the right side or the left side with respect to the direction of advance of the sheet material in accordance with the size of a sheet material W fed.

Numerals 10, 11 designate fixed guides which are long in the longitudinal direction and control or restrict the shift of the sheet material W in the lateral direction, that is, onto the right side of the sheet material W. The fixed guide 10 is fixed to a frame located on the right side of the wider belt conveyor 4 on the front end. The fixed guide 11 is fixed to a frame located on the right side of the wider belt conveyor 7 on the rear end. The upper edges of the fixed guides 10, 11 are somewhat higher than the top surfaces of the belt conveyors 4, 7.

Numerals 12, 13 designate similar guides pairing respectively with the fixed guides 10, 11. The guides 12, 13 guide the sheet material W before machining and after machining. The guide 12 is fixed to the front end of a frame located on the left side of the front belt conveyor 6 provided on the left side with respect to the direction of advance of the sheet. The guide 13 is fixed to the rear end of a frame located on the left side of the belt conveyor 9 on the rear end. The guides 12, 13 are shifted laterally in accordance with the shift of the conveyors 6, 9.

When the sheet material W is so small in width as to be beyond the extent of the shift of the belt conveyors 6, 9 and therefore cannot be guided by the guides 12, 13, the following measures are taken. Similar guides (not shown in the figure) as the above are fitted to frames on the left side of the belt conveyors 5, 8 installed in the center, respectively. These guides may be designed to be removable and it is advisable that these guides be made removable in the lateral direction with respect to the direction of advance of the sheet.

Numerals 14, 14 designate a pair of elongate holders provided of on the right and the left, which extend from the floor surface inside the frames 1, 1. A guide shaft 16 is supported laterally between the rear end portions of the pair holders 14, 14 respectively on the right and the left of the holders. The guide shaft 16 has a rack 15 on its top flat surface of the required length. The guide shaft 16 is provided with a first positioning device 17 which may be moved in the lateral direction.

In the rear of the table 2 on the floor surface, a pair of right and left holders 18 are provided near the front ends of the belt conveyors 7, 8, 9 for feeding the sheet material. In the same way as the guide shaft 16, a guide shaft 20 is supported laterally between the pair of right and left holders 18, 18. The guide shaft 20 has a rack 19 on its top flat surface of the required length. The guide shaft 20 is provided with a second positioning device 21 which has substantially the same construction as the first positioning device 17 and which may be moved laterally.

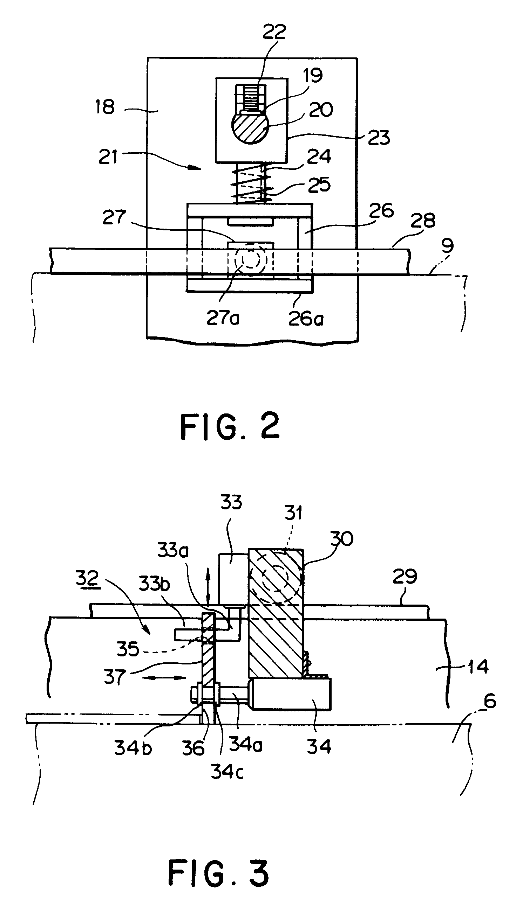

The second positioning device 21 is constructed as shown in Fig. 2. The device has a slider 23 which is fitted slidably on the guide shaft 20. The slider 23 is fitted with a pinion 22 moving in the lateral direction. The pinion 22 gears with the rack 19. A support shaft 24 is suspended from the lower end of the slider 23. A compression coil spring 25 is coiled on this support shaft 24. At the lower end of the support shaft 24, a support 26 having square sides and being frame-like is hung so that it can move vertically. An air cylinder 27 is mounted on the bottom piece 26a of the support frame 26. The moving guide 28 of the required length is fixed at about the middle, to the fore end of piston rod 27a. The moving guide 28 is provided in parallel to the above-mentioned fixed guide 11. The moving guide 28 can be moved with respect to the top surface of the belt conveyor 9 or 8 toward the fixed guide 11.

The moving guide 28 and the fixed guide 11 with which this moving guide pairs, press the opposite sides of the sheet material W so that the sheet material may be stabilized. When a sheet material having a different width is used, the slider 23 is moved in the lateral direction along the guide shaft 20, whereby the relative width between the fixed guide 11 and the moving guide 28 may be adjusted.

When it is desired to move the support frame 26 and the moving guide 28 which is integral with this frame beyond the belt conveyor 9 or 8, it is only necessary to lift the entire support frame 26 upwardly against the compression coil spring 25.

The first positioning device 17 has substantially the same construction as the above-mentioned second positioning device 21 and conducts the same operation as the latter. Therefore the components of the first positioning device 17 which are the same as those of the second positioning device 21, are given the same numerals so that a detailed description of the device 17 is omitted.

With reference to Fig. 1, racks 29, 29 are fixed on the top surfaces the holders 14, 14 and extend from about the middle of the holders over to the front end parts respectively. Pinions 31, 31 gear with the two racks 29, 29 respectively. These pinions are supported axially at the opposite right and left ends of a support 30 carried between the holders 14, 14.

A push-back device 32 is fixed to the support 30. The push-back device 32 pushes back the sheet material W conveyed by the belt conveyors 4, 5, 6 for discharging a sheet, towards the dies 3 in the rear.

The push-back device 32 is constructed as shown in Fig. 3. The push-back device 32 has a pair of air cylinders 33, 33 provided at the right and the left for elevation. The air cylinders 33, 33 are fixed on the surface of the rear part of the support 30. Piston rods 33a, 33a of the air cylinders 33, 33 project downward. To the front ends of the piston rods 33a, 33a, pull-up rods 33b, 33b are fitted so that they face the rear of the apparatus. On the lower side of the support 30, a pair of right and left air cylinders 34, 34 are fixed for pushing back. Piston rods 34a, 34a of the air cylinders 34, 34 protrude towards the rear. In the rear of the support 30, a gate plate 37 is provided. The gate plate 37 is parallel to the support 30. In the upper part of the gate plate 37, a pair of right and left through holes 35, 35 are made. The pull-up rods 33b, 33b are inserted freely through the right and left through holes 35, 35 respectively. A pair of longitudinally long holes 36, 36 are made at the right and the left in the lower part of the gate plate 37. The respective piston rods 34a, 34a of the two air cylinders 34, 34 for push back are inserted freely through the pair of longitudinally-long holes 36, 36 on the right and the left. Retainer fittings 34b, 34c are fixed to the piston rods 34a, 34a. The retainer fittings 34b, 34c are ring-shaped. The diameter of the outer circumference of each of the retainer fittings 34b, 34c is larger than the lateral width of the longitudinally-long hole 36.

The gate plate 37 is elevated when the piston rods 33a, 33a are pulled up by the operation of the air cylinders 33, 33 for elevation and is lowered when the piston rods 33a, 33a are pulled down. When the gate plate 37 is lowered, its lower end surface is at its lowermost position in proximity to the respective top surfaces of the belt conveyors 4, 5, 6, but this lowermost position near the surfaces of these conveyors is at the same time the upper limit position of the belt conveyors thus allowing the sheet material W to pass through thereunder.

Since the piston rods 34a, 34a are inserted freely through the longitudinally-long holes 36 of the gate plate 37, the gate plate 37 can be elevated and lowered without any hindrance.

The pull-up rods 33b, 33b are inserted freely through the through holes 35, 35 of the gate plate 37, and therefore the gate plate 37 moves in the longitudinal direction, that is, the right or left direction of Fig. 3 while being guided by the pull-up rods 33b. Since the retainer fittings 34b, 34c are fixed to the piston rods 34a with the gate plate 37 held therebetween and the position rods 34a are inserted freely through the longitudinally-long hole 36 of the gate plate 37, the movement of the gate plate 37 in the longitudinal direction is regulated by the piston rod 34a. By making the push-back air cylinders 34 operate, accordingly, the gate plate 37 can be moved just above the top surfaces of the belt conveyors 4, 5, 6 in the longitudinal direction without any hindrance.

Next, the dies 3 will be described in detail.

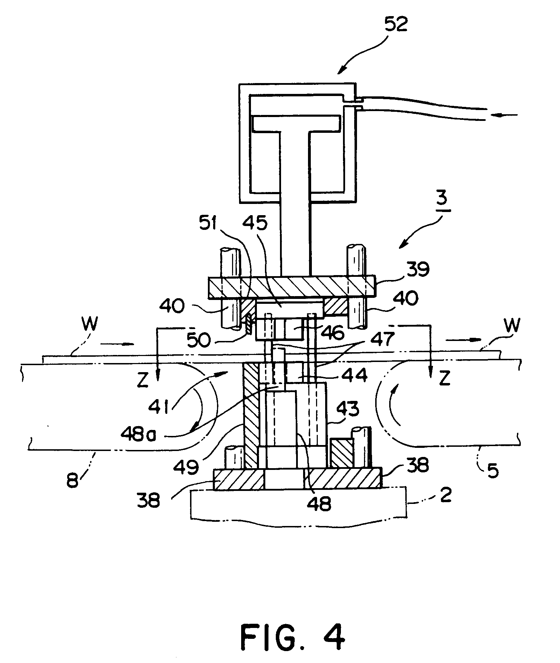

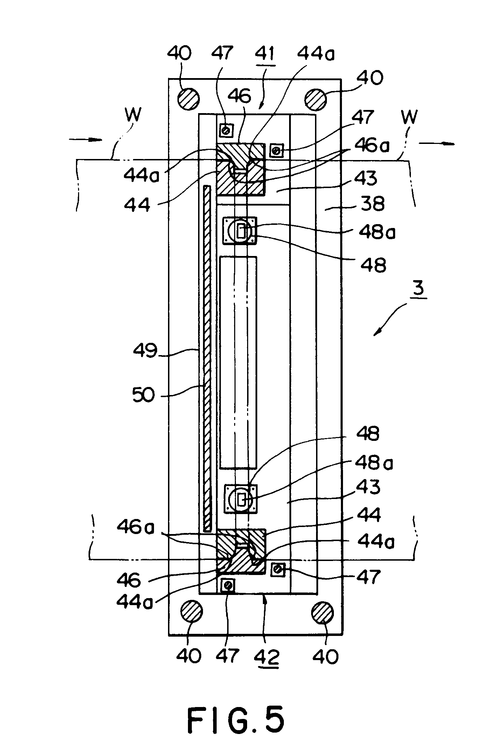

In Figs. 4 and 5, numeral 38 denotes a fixed base set on the table 2 in the machining apparatus 0. Numeral 39 designates a base (driving means) which is fitted to a ram 52 and is movable in the vertical direction. These two bases 38, 39 are positioned to each other by means of four poles 40, 40 disposed at the opposite right and left sides of the bases. The two bases 38, 39 are integrated in a unit.

Numerals 41, 42 designate die sets provided at the opposite sides between the upper and lower bases 38, 39. The die sets 41, 42 are respectively provided symmetrically at the right and the left of the die sets. The die sets 41, 42 have cutting means, that is lower and upper knife edges 44 and 46 respectively. The lower cutting member knife edge 44 is fixed on the top surface of a lever die holder 43 mounted on the fixed base 38. The lower knife edge 44 is provided with cutting edge faces 44a, 44a shaped like circular arcs curved torwards the front and the rear respectively. The lower knife edge 44 is substantially a recess in shape in the plan view of Fig. 5. The upper knife edge or cutting member 46 is fixed on the bottom surface of the upper die holder 45 provided just under the movable base 39. The upper knife edge 46 is provided with cutting edge faces 46a, 46a which match with the above-mentioned circular arc cutting edge faces 44A, 44A. The upper knife edge 46 is a protrusion in the plan view of Fig. 5.

Numerals 47, 47 designate guide poles which extend upwardly between the upper and lower die holders 43 and 45. The movable base 39 is pushed down by the ram 52. The ram 52 has hydraulic cylinder and a piston. When the movable base 39 is pushed down, the upper die holders 45 are lowered while being guided by the guide poles 47, 47. By the lowering of the die holder 45, the upper knife edge 46 and the lower knife edge 44 are caused to engage with each other, whereby the corner portions of the sheet material W are cut by a shearing action.

The die set 42 at its left side is movable in the lateral direction thereby enabling it to perform its function even when sheet material W having a different width is fed.

Numerals 48a, 48a designate stoppers for the sheet material located in the interior of the lower knife edges 44 and the upper knife edge 46 at the right and the left respectively. The stoppers 48a, 48a are provided on the center lines connecting the lower knife edge 44 and the upper knife edge 46 at the right and the left respectively. The stoppers 48a, 48a are a pair of right and left piston rods shaped like a square pillar. These piston rods 48a, 48a are moved vertically by the action of air cylinders 48, 48. When the piston rod 48a moves upwardly, it projects above the lebel of the lower knife edge 44. When the piston rod 48a moves downwardly, it moves back below the lebel of the lower knife edge 44. The front or rear end of the sheet material W can be brought into contact with the piston rod 48a, that is the stopper, when the piston rod 48a projects above the lebel of the lower knife edge 44.

The size of the piston rod 48a in the longitudinal direction is adjusted according to the size of the sheet material. When the piston rod 48a comes in contact with the front or rear end of the sheet material W, each corner portion of the sheet material W is positioned above the lower knife edge 44 on the right or the left and just below the cutting edge face 46a of the upper knife edge 46.

A bearing block 49 is fixed on the fixed base 38, in the rear of the lower die holder 43. The bearing block 49 is flush with the lower knife edge 44. On the bottom surface of the movable base 39 facing the bearing block 49, an upper tool 51 is fixed, the latter being provided with a presser body 50 which is an elongated recess-forming member. By means of the presser body 50 and the bearing block 49, an elongate recess for bending, such as a recessed groove, is formed in the surface of the sheet material W.

A description of the method of manufacture of a pallet from the sheet material of a synthetic resin by employing the above described punching device follows. The sheet material W is polygonal, e.g. rectangular, in shape before being machined. The sheet material W is one which has beforehand been cut in conformity with the external dimensions of the pallet to be manufactured.

Prior to the machining of the sheet material W, first, the positions in the lateral direction of the guides 12, 13 and the first and second positioning devices 17, 21 are properly set beforehand in conformity with the width of the sheet material W as shown in Fig. 1. Likewise, the position of the push-back device 32 in the longitudinal direction is properly set beforehand in conformity with the length of the aforesaid sheet material W. Besides, the gate plate 37 of the push-back device 32 is lowered. Moreover, the piston rod 48a of the air cylinder 48 provided in the die set 41 is made to project.

A first sheet material W is delivered from a sheet material stocker (not shown). The first sheet material W so delivered is transferred forward by the belt conveyors 7, 8, 9 for feeding the sheet material. The front end of the first sheet material W comes into contact with the piston rod 48a which has been made to project beforehand. When the contact occurs, the belt conveyors 7, 8, 9 are stopped. Simultaneously, the air cylinder 27 of the second positioning device 21 is actuated. When the air cylinder 27 operates, the movable guide 28 presses the sheet material W at the right so as to fix the sheet material W in an immovable state by the movable guide 28 and the fixed guide 11.

At this time, both the corner portions of the front of the sheet material W are positioned automatically between the cutting edge face 44a on the rear side of the lower knife edge 44 and the cutting edge face 46a on the rear side of the upper knife edge 46, as shown in Figures 4 and 5.

When the ram 52 is operated in this state, the upper knife edge 46 is pushed down. Both corner portions of the sheet material W are cut so that they form circular arcs respectively, due to the action of the upper knife edge 46 being pushed down. In addition, an elongated recess such as a groove is formed in the surface of the front end of the sheet material W due to the strong pressure of the presser body 50.

Subsequently, the movable guide 28 is returned to its initial position and, simultaneously, the piston rod 48a is made to move back, so that the sheet material W is released. Then, the belt conveyors 4, 5, 6 for discharging the sheet are operated simultaneously. The sheet material W is transferred forwardly until it comes into contact with the gate plate 37.

Immediately after the rear end of the sheet material W passes the top surface of the piston rod 48a, this rod is caused to project again, so as to prepare for the stopping a subsequent sheet material.

When the sheet material W comes into contact with the gate plate 37, the belt conveyors 4, 5, 6 for discharging the sheet will stop at once. Immediately thereafter, the right and left air cylinders 34 for push back will operate whereby the gate plate 37 is moved back until the rear end of the sheet material W comes into contact with the piston rod 48a.

In this manner, both rear corner portions of the sheet material W are automatically positioned between the cutting edge face 44a in the front of the lower knife edge 44 and the cutting edge face 46a in the front of the upper knife edge 46 (see Fig. 5).

Meanwhile, a second sheet material W is fed from the sheet material stocker. The second sheet material W is transferred, in the same manner as the first sheet material, by the belt conveyors 7, 8, 9 for feeding the sheet material, which operate successively. The front end of the second sheet material W comes into contact with the piston rod 48a. Then both of the corner portions in the front end of the second sheet material W are positioned between the cutting edge face 44a on the rear side of the lower knife edge 44 and the cutting edge face 46a on the rear side of the upper knife edge 46. The second sheet material W is caused to stand still.

The above stated step of feeding the second sheet material W is executed substantially simultaneously with the above described operation of pushing back the first sheet material W. At the point when the two sheet materials W come into contact with piston rod 48a, the first and second positioning devices 17, 21 will operate so as to respectively fix the two sheet materials W in an immovable state by the front and rear movable guides 28 and the fixed guides 10 and 11.

At this time, the air cylinder 34 for push back contractively moves back and the gate plate 37 returns to the original position. Thereafter the gate plate 37 is elevated to the position allowing the machined sheet material W to pass through, by the operation of the air cylinder 33 for elevation.

In this state the ram 52 is operated to push down the right and left upper knife edges 44. In this matter, both the rear corner portions of the first sheet material W and both front corner portions of the second sheet material W are cut simultaneously so that all the corner portions so cut form circular arcs respectively. At the same time, an elongated recess such as a recessed groove, is formed in the surface of the front end of the second sheet material W by the presser body 50.

Subsequently, movable guides 28 of the first and second positioning devices 17, 21 are returned to their initial positions. The piston rods 48a are contractively moved back simultaneously. Then, the front and rear belt conveyors 4, 5, 6 and 7, 8, 9 are driven. The first sheet material W of which the machining has ended, i.e. a manufactured pallet P, is passed under the gate plate 37 which is beforehand elevated and made to stand still and the sheet is conveyed to a prescribed place (see Fig. 1).

The gate plate 37 lowered just after the first sheet material W passes. The gate plate 37 which is lowered permits advence of the second sheet material W transferred onto the side of the belt conveyors 4, 5, 6 for discharging the sheet.

At this time, a third sheet material delivered from the sheet material stocker is already in contact with the piston rod 48a. With the same steps as described above, the rear corner portions of the second sheet material W and the front corner portions and the elongated recess of the third sheet material are machined simultaneously.

By repeating the above described steps, the sheet pallet P can be manufactured in succession.

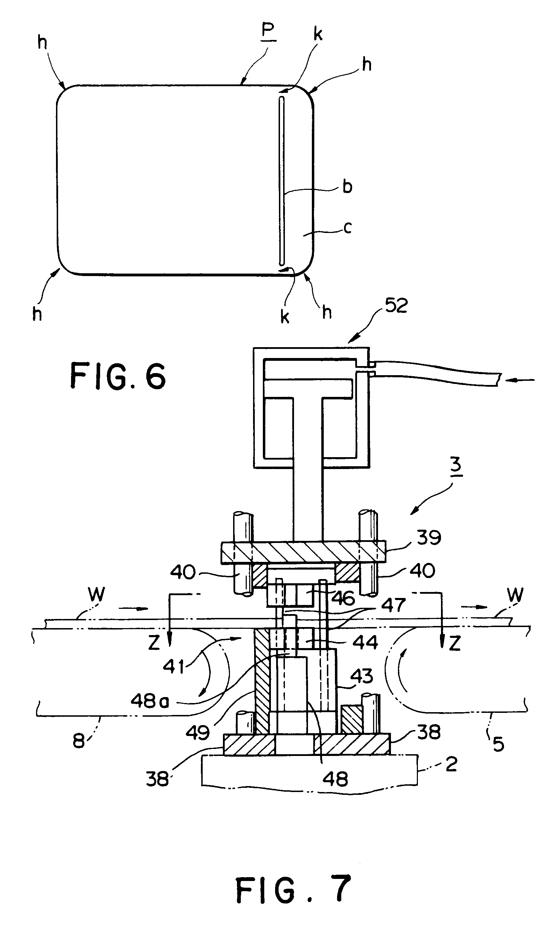

Fig. 6 shows the pallet P manufactured by the above described steps. The pallet P has a circular arc shaped surface in each corner portion h. Besides, this sheet pallet P has an elongated recess, specifically a recessed groove b formed along the direction of the width in the surface of the front end part of the pallet. The elongate recess b is formed by pressing without heating the sheet material W. Thus, the thickness of the sheet in the portion of the elongated recess b has decreased, but the density in this position has increased. Therefore the strength of this portion of the elongated recess b is not substantially less.

As shown in Fig. 5, the length of the presser body 50 for forming the elongated recess is smaller than the width of the sheet material W. Accordingly, as shown in Fig. 6, the elongated recess does not extend to the portion k defined by each of the ends of the elongated recess b and the outer periphery of the sheet P. In the prior art sheet, in contrast, the elongated recess extends to the outer periphery of the sheet. The sheet manufactured by the above described steps according to the present invention has the part k and, therefore, has a greater strength than the prior art sheet.

As described above, according to the present invention, the sheet material W is cut only at the corners thereof, not at the entire periphery and therefore the yield is greatly improved and the cost of manufacture is reduced.

Since the corner portions are machined substantially simultaneously with the formation of the elongated recess, productivity of the product sheets is improved.

Since the respective front and rear corner portions of two successive sheet materials W that is, the preceding and following ones, are cut collectively, that is, substantially simultaneously, the corner portions of these sheet materials can be cut at a time when the corner portions are in a proximity to one another. Therefore, the corner portions can be cut at the same time without need of an increased space for accomodating the lower knife edge 44 and the upper knife edge 46, so as to enable the use of a sheet manufacturing apparatus which is smaller in size.

In addition, since the corner portions are machined substantially simultaneously with the formation of the elongated recess in the course of conveyance of the sheet material W, the sheets can be manufactured automatically and successively.

Further, since the corner portions of the sheet material W are cut by the shearing action of the lower knife edge 44 and the upper knife edge 46, the corner portions can be completely cut. Accordingly, the pallet can be produced automatically and successively with little labor in the manufacturing steps as compared with the case in which such cutting is conducted, for example, a press action, and, consequently the productivity can be improved. According to the press cutting in the prior art, the edge of the knife edge body did not reach the lower die completely through the sheet material when it was attempted to cause to cut through the sheet material, and consequently the pallet after punching could not be separated completely from the sheet material. This necessitated a human hands for cutting off, thus wasting labor and reducing productivity.

Furthermore, according to the present invention, the lower knife edge 44 and the upper knife edge 46 do not come into direct contact with each other when the cutting is carried out by the shearing action, and therefore the cycle of replacement of the two knife edges and the lifetime can be prolonged.

The present invention is not limited to the above-described embodiment, and modifications may be made within the scope of the invention

For instance, the bearing block 49 and presser body 50 for forming the elongated recess in the surface of the sheet material W may be provided in front of the die set 49 so as to form the elongated recess on the rear side of the sheet material W. Also, they may be provided both in the front and in the rear so as to form recessed grooves in two places, that is, the front and rear parts of the sheet material W.

While there has been made a description of an apparatus for manufacturing the sheet pallets in the above embodiment, the present invention is not limited thereto, and it may also be applied to an apparatus for manufacturing for instance, sheets. In this case, it is unnecessary to form the elongated recess for bending in the tier sheet.

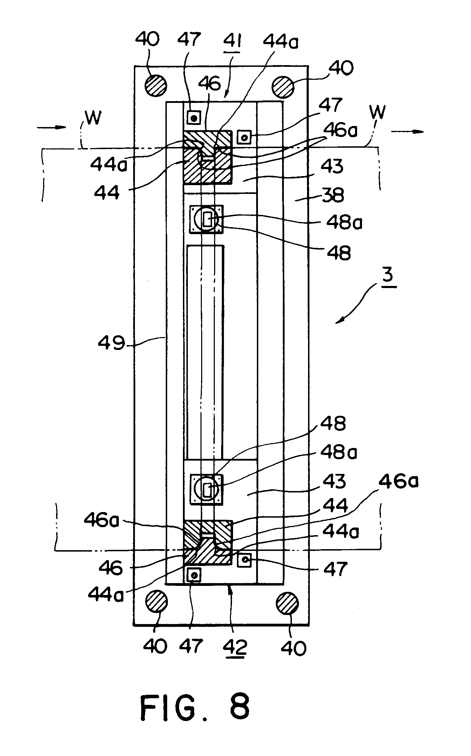

Fig. 7 is a right side view of a longitudinal section of the center of a die of the apparatus for manufacturing the tier sheets, which apparatus is a second embodiment of the present invention, and Fig. 8 is a horizontal plan view of a longitudinal section of a principal part taken along the line Z - Z in Fig. 7. The apparatus of Figs. 7 and 8 is the same as the apparatus of Figs. 4 and 5 but the presser body 50 has been removed. Thus the construction except for body 50 is identical to that of the apparatus of Figs. 4 and 5. The operations and actions of the apparatus are the same as those of the first embodiment described above, excepting that the elongated recess b is not formed in the sheet P because of the absence of the presser body 50.

While the corner portions of the sheet material are cut so that they take the shape of a circular arc in the first and second embodiments described above, the shape is not limited to circular arc. The shapes of the corner portions so cut may be different from each other.

While the sheet material is made of a synthetic resin in the above described embodiment, the present invention is not limited thereto, and the sheet may also be made, of course, of paper, wood, cloth, metal or a combination of these substances.

Moreover, the movable base 39 is pushed down by using the ram 52 having the hydraulic cylinder and the piston, but another push down mechanism may also be employed. For instance, a crank mechanism or the like may also be employed. For instance, a crank mechanism or the like may also be employed.

According to the present invention, as described above, since the sheet inaterial is cut only at the corner portions, not at the entire periphery thereof, to obtain a product sheet, the yield of product sheets will be greatly improved and the manufacture cost thereof will be reduced. Further, the corner portions are machined collectively, that is substantially at the same time, and therefore automatic and successive manufacture of the product sheets can be executed. Machining for the formation of the elongated recess can also be executed simultaneously with the cutting of the corner portions, if necessary. Moreover, the rear corner portions of the sheet material fed previously and the front corner portions of the sheet material fed subsequently are cut essentially at the same time collectively, and therefore a plurality of the corner portions of the sheet materials fed previously and subsequently can be cut in proximity to one another. Therefore, the corner portions can be cut without any increase in a space occupied by the cutting means. By the use of this method of cutting, the apparatus can be made smaller. In addition, the corner portions etc. are machined in the course of conveyance of the sheet material, and therefore the sheet can advantageously be produced automatically and successively.

## Claims

1. A method of manufacturing pallets from a plurality of sheets, said sheets having a predetermined polygonal shape and dimensions substantially the same as the dimensions of the pallets to be manufactured, said plurality of sheets comprising a first sheet having a rear side, a second sheet having a front side and at least a third sheet, characterised in that the method comprises:
a first step of substantially cutting at the same time the rear corner portions of said first sheet positioned in a first area, said first area having one side, said rear corner portions of said first sheet facing one side of a second area, and the front corner portions of said second sheet positioned in said second area, said front corner portions of said second sheet facing said one side of said first area; and
a second step of conveying said first sheet from said first area to a discharging area, conveying said second sheet from said second area to said first area, and conveying said third sheet from a feeding area to said second area.

2. A method as claimed in claim 1, characterised in that said plurality of sheets comprises successive sheets and in that said first step and said second step are repeated with said successive sheets.

3. A method as claimed in claim 1 or 2, further comprising a positioning step of positioning substantially at the same time the rear side of said first sheet and the front side of the second sheet.

4. A method as claimed in claim 1, 2 or 3 characterised in that said first step comprises a forming step wherein a recess groove is formed for bending at least one of said first sheet and said second sheet.

5. A method as claimed in claim 4, characterised in that said cutting step and forming step are carried out substantially at the same time.

6. A method as claimed in claim 5, characterised in that said recess groove extends along the width of each of said sheets, the length of said groove being less than the entire width of said sheets.

7. A method as claimed in any preceding claim, characterised in that said second step comprises a step of positioning said second sheet and said third sheet by stopping said sheets against a stopper.

8. A method as claimed in claim 7, characterised in that said second step comprises a step of conveying said second sheet from said second area to said first area by passing over said stopper.

9. A method as claimed in claim 7, characterised in that said second step comprises a step of moving said stopper back to a position which does not hinder the conveyance of said second sheet at a moment when said second sheet is conveyed from said second area to said first area by passing over said stopper.

10. A method as claimed in claim 9, characterised in that said second step comprises a step of pushing-back said second sheet and stopping it against said stopper, after said second sheet is conveyed from said second area to said first area by passing over said stopper.

11. A method as claimed in claim 1, further comprising a step of feeding said first sheet ahead to the position of a stopper, a step of projecting said stopper and a step of positioning substantially at the same time the rear side of said first sheet and the front side of the second sheet by means of said stopper.

12. An apparatus for manufacturing pallets (W) characterised in that the apparatus comprises:
a) conveying means (7,8,9) for conveying a first sheet and a second sheet in sequence from a feeding position to a second discharging position, said first sheet having a rear side and said second sheet having a front side;
b) positioning means (48a, 48a) for positioning said first sheet and said second sheet in such a manner that the rear side of said first sheet and the front side of said second sheet face each other at a a position adjacent to a predetermined cutting position, said positioning means being located between said feeding position and said discharging position;
c) cutting means (3) for cutting substantially at the same time the corner portions of the rear side of said first sheet and the corner portions of the front side of said second sheet.

13. An apparatus as claimed in claim 12, characterised in that said positioning means (48a, 48a) comprises a stopper (48) for stopping the rear side of said first sheet and the front side of said second sheet, displacing means (48) for displacing said stopper to a position where the rear side of said first sheet and the front side of said second sheet can be brought into contact with said stopper and to another position where the rear side of said first sheet and the front side of said second sheet cannot be brought into contact with said stopper, and pushing means (32) for pushing said first sheet back to said stopper to push the rear side of said first sheet on to said stopper.

14. An apparatus as claimed in claim 12 or 13, characterised in that each of said first sheet and said second sheet has a front side and a rear side and has a corner portion at the front side and rear side thereof, and said cutting means comprises means for cutting said corner portions.

15. An apparatus as claimed in claim 12, 13 or 14 characterised in that said apparatus further comprises a groove-forming means (50) for forming a recessed groove (b) in said first sheet and in the said second sheet for bending said sheets through said recessed groove.

16. An apparatus as claimed in claim 15, characterised in that said groove has a recessed shape, said groove-forming means (50) comprises a protrusion member (50) having a configuration corresponding to the recessed shape of said groove, and pressing means (52) for pressing said protrusion member in said first sheet and in said second sheet.

17. An apparatus as claimed in claim 12, 13, 14, 15 or 16, characterised in that said cutting means (3) comprises a stationary cutting member (44, 44), a movable cutting member (46, 46) for cutting in association with said stationary cutting member said portion of said first sheet and a portion of said second sheet by a shearing action thereof, and actuating means (52) for actuating said movable cutting member.

18. An apparatus as claimed in claim 17, characterised in that said apparatus further comprises a protrusion member (50) for forming a recessed groove (b) in said first sheet and in said second sheet for bending said sheets through said recessed groove, and a supporting member (45, 51) supporting said protrusion member and said movable cutting member, said supporting member being adapted to be driven by said actuating means.

## Patentansprüche

1. Verfahren zur Herstellung von Paletten aus einer Vielzahl von Platten, wobei die Platten eine vorbestimmte polygonale Form und Abmessungen aufweisen, die im wesentlichen dieselben sind wie die Abmessungen der herzustellenden Paletten, wobei die Vielzahl von Platten eine erste Platte mit einer Rückseite, eine zweite Platte mit einer Vorderseite und mindestens eine dritte Platte umfaßt, dadurch gekennzeichnet, daß das Verfahren umfaßt:
einen ersten Schritt, bei dem die hinteren Eckteile der ersten in einem ersten Bereich positionierten Platte im wesentlichen zur selben Zeit geschnitten werden, wobei die hinteren Eckteile der ersten Platte einer Seite eines zweiten Bereichs zugewandt sind und die vorderen Eckteile der zweiten Platte in dem zweiten Bereich positioniert sind, wobei die vorderen Eckteile der zweiten Platte der einen Seite des ersten Bereichs zugewandt sind; und
einen zweiten Schritt, bei dem die erste Platte von dem ersten Bereich zu einem Austrittsbereich transportiert wird, die zweite Platte von dem zweiten Bereich zu dem ersten Bereich transportiert wird und die dritte Platte von einem Zuführbereich zu dem zweiten Bereich transportiert wird.

2. Verfahren nach Anspruch 1, dadurch gekennzeichnet, daß die Vielzahl von Platten aufeinanderfolgende Platten umfaßt und daß der erste Schritt und der zweite Schritt mit den aufeinanderfolgenden Platten wiederholt werden.

3. Verfahren nach Anspruch 1 oder 2, darüber hinaus umfassend einen Positionierungsschritt, bei dem im wesentlichen zur selben Zeit die Rückseite der ersten Platte und die Vorderseite der zweiten Platte positioniert werden.

4. Verfahren nach Anspruch 1, 2 oder 3, dadurch gekennzeichnet, daß der erste Schritt einen Formungsschritt umfaßt, bei dem eine vertiefte Rille geformt wird, um mindestens eine der ersten Platten und der zweiten Platten zu biegen.

5. Verfahren nach Anspruch 4, dadurch gekennzeichnet, daß der Schneideschritt und der Formungsschritt im wesentlichen gleichzeitig durchgeführt werden.

6. Verfahren nach Anspruch 5, dadurch gekennzeichnet, daß die vertiefte Rille sich entlang der Breite einer jeder der Platten erstreckt, wobei die Länge der Rille geringer ist als die gesamte Breite der Platten.

7. Verfahren nach einem der vorhergehenden Ansprüche, dadurch gekennzeichnet, daß der zweite Schritt einen Schritt umfaßt, bei dem die zweite Platte und die dritte Platte durch Stoppen der Platten gegen einen Stopper positioniert werden.

8. Verfahren nach Anspruch 7, dadurch gekennzeichnet, daß der zweite Schritt einen Schritt umfaßt, bei dem die zweite Platte von dem zweiten Bereich zu dem ersten Bereich transportiert wird, indem sie über den Stopper geleitet wird.

9. Verfahren nach Anspruch 7, dadurch gekennzeichnet, daß der zweite Schritt einen Schritt umfaßt, bei dem der Stopper zu einer Position zurückbewegt wird, die den Transport der zweiten Platte zu einem Zeitpunkt, wenn die zweite Platte von dem zweiten Bereich zu dem ersten Bereich transportiert wird, indem sie über den Stopper geleitet wird, nicht behindert.

10. Verfahren nach Anspruch 9, dadurch gekennzeichnet, daß der zweite Schritt einen Schritt umfaßt, bei dem die zweite Platte zurückgeschoben wird und an dem Stopper gestoppt wird, nachdem die zweite Platte von dem zweiten Bereich zu dem ersten Bereich transportiert wurde, indem sie über den Stopper geleitet wurde.

11. Verfahren nach Anspruch 1, darüber hinaus umfassend einen Schritt, bei dem die erste Platte nach vorn zu der Position eines Stoppers geführt wird, einen Schritt, bei dem man den Stopper herausstehen läßt und einen Schritt, bei dem die Rückseite der ersten Platte und die Vorderseite der zweiten Platte mittels des Stoppers im wesentlichen gleichzeitig positioniert werden.

12. Vorrichtung zum Herstellen von Paletten (W), dadurch gekennzeichnet, daß die Vorrichtung umfaßt:
a) Fördermittel (7, 8, 9) zum Transportieren einer ersten Platte und einer zweiten Platte in Folge von einer Zuführposition zu einer zweiten Austrittsposition, wobei die erste Platte eine Rückseite und die zweite Platte eine Vorderseite aufweist;
b) Positionierungsvorrichtungen (48a, 48a) zum Positionieren der ersten Platte und der zweiten Platte auf solche weise, daß die Rückseite der ersten Platte und die Vorderseite der zweiten Platte einander in einer Position zugewandt sind, die einer vorbestimmten Schneideposition benachbart ist, wobei sich die Positionierungsvorrichtung zwischen der Zuführposition und der Austrittsposition befindet;
c) Schneidevorrichtungen (3), um die Eckteile der Rückseite der ersten Platte und der Eckteile der Vorderseite der zweiten Platte im wesentlichen gleichzeitig zu schneiden.

13. Vorrichtung nach Anspruch 12, dadurch gekennzeichnet, daß die Positioniervorrichtungen (48a, 48a) einen Stopper (48) umfassen, um die Rückseite der ersten Platte und die Vorderseite der zweiten Platte zu stoppen, eine Verschiebevorrichtung (48) zum Verschieben des Stoppers an eine Position, bei der die Rückseite der ersten Platte und die Vorderseite der zweiten Platte mit dem Stopper in Kontakt gebracht und zu einer anderen Position gebracht werden können, bei der die Rückseite der ersten Platte und die Vorderseite der zweiten Platte mit dem Stopper nicht in Kontakt gebracht werden können, und eine Schiebevorrichtung (32) um die erste Platte zu dem Stopper zurückzuschieben, um die Rückseite der ersten Platte auf den Stopper zu schieben.

14. Vorrichtung nach Anspruch 12 oder 13, dadurch gekennzeichnet, daß jede der ersten Platten und der zweiten Platten eine Vorderseite und eine Rückseite aufweist und an der Vorderseite und der Rückseite davon einen Eckteil aufweist und die Schneidevorrichtung Vorrichtungen zum Schneiden der Eckteile umfaßt.

15. Vorrichtung nach Anspruch 12, 13 oder 14, dadurch gekennzeichnet, daß die Vorrichtung darüber hinaus eine Rillen bildende Vorrichtung (50) umfaßt, um eine vertiefte Rille (b) in der ersten Platte und in der zweiten Platte zu bilden, um die Platten durch die vertiefte Rille zu biegen.

16. Vorrichtung nach Anspruch 15, dadurch gekennzeichnet, daß die Rille eine vertiefte Form aufweist, die Rillen bildende Vorrichtung (50) ein vorstehendes Element (50) umfaßt, das eine Konfiguration aufweist, die der vertieften Form der Rille entspricht, und eine Druckvorrichtung (52) umfaßt, um das vorstehende Element in die erste Platte und in die zweite Platte zu drücken.

17. Vorrichtung nach Anspruch 12, 13, 14, 15 oder 16, dadurch gekennzeichnet, daß die Schneidevorrichtung (3) ein stationäres Schneideelement (44, 44), ein bewegliches Schneideelement (46, 46), um in Verbindung mit dem stationären Schneideelement den Teil der ersten Platte und einen Teil der zweiten Platte durch Scherwirkung zu schneiden und eine Antriebsvorrichtung (52), um das bewegbare Schneideelement zu betätigen, umfaßt.

18. Vorrichtung nach Anspruch 17, dadurch gekennzeichnet, daß die Vorrichtung darüber hinaus ein vorstehendes Element (50) umfaßt, um eine vertiefte Rille (b) in der ersten Platte und in der zweiten Platte zu bilden, um die Platten durch die vertiefte Rille zu biegen, und ein Trägerelement (45, 51) umfaßt, das das vorstehende Element und das bewegbare Schneideelement trägt, wobei das Trägerelement so ausgestaltet ist, daß es durch die Antriebvorrichtung angetrieben wird.

## Revendications

1. Procédé de fabrication de palettes à partir d'une série de feuilles, ces feuilles ayant une forme polygonale déterminée et des dimensions sensiblement les mêmes que celles des palettes à fabriquer, la série de feuilles comprenant une première feuille ayant un côté arrière, une deuxième feuille ayant un côté avant et au moins une troisième feuille, caractérisé en ce qu'il comprend :
une première phase de coupe sensiblement en même temps des parties de coin arrière de la première feuille placée dans une première zone, cette première zone ayant un côté, ces parties de coin arrière de la première feuille faisant face à un côté d'une deuxième zone, et des parties de coin avant de la deuxième feuille placée dans la deuxième zone, ces parties de coin avant de la deuxième feuille faisant face audit côté de la première zone, et
une deuxième phase de transport de la première feuille de la première zone à une zone d'évacuation, transport de la deuxième feuille de la deuxième zone à la première zone, et transport de la troisième feuille d'une zone d'amenée à la deuxième zone.

2. Procédé selon la revendication 1, caractérisé en ce que la série de feuilles comprend des feuilles successives et que la première phase et la deuxième phase sont répétées avec ces feuilles successives.

3. Procédé selon l'une des revendications 1 et 2, comprenant en outre une phase de positionnement sensiblement en même temps du côté arrière de la première feuille et du côté avant de la deuxième feuille.

4. Procédé selon l'une des revendications 1, 2 et 3, caractérisé en ce que la première phase comprend une phase de formation dans laquelle une rainure de pliage est formée sur au moins une des première et deuxième feuilles.

5. Procédé selon la revendication 4, caractérisé en ce que la phase de coupe et la phase de formation sont exécutées sensiblement en même temps.

6. Procédé selon la revendication 5, caractérisé en ce que la rainure s'étend dans le sens de la largeur de chacune des feuilles et sa longueur est inférieure à la largeur totale des feuilles.

7. Procédé selon l'une des revendications précédentes, caractérisé en ce que la deuxième phase comprend une phase de positionnement de la deuxième feuille et de la troisième feuille par arrêt de ces feuilles contre une butée.

8. Procédé selon la revendication 7, caractérisé en ce que la deuxième phase comprend une phase de transport de la deuxième feuille de la deuxième zone à la première zone par franchissement de la butée.

9. Procédé selon la revendication 7, caractérisé en ce que la deuxième phase comprend une phase de recul de la butée à une position qui n'entrave pas le transport de la deuxième feuille au moment où celle-ci est transportée de la deuxième zone à la première zone par franchissement de la butée.

10. Procédé selon la revendication 9, caractérisé en ce que la deuxième phase comprend une phase de repoussement de la deuxième feuille et d'arrêt de celle-ci contre la butée après qu'elle a été transportée de la deuxième zone à la première zone par franchissement de la butée.

11. Procédé selon la revendication 1, comprenant en outre une phase d'amenée de la première feuille en avant de la position d'une butée, une phase d'avance de cette butée et une phase de positionnement sensiblement en même temps du côté arrière de la première feuille et du côté avant de la deuxième feuille au moyen de cette butée.

12. Appareil de fabrication de palettes (W) caractérisé en ce qu'il comprend :
a) des moyens de transport (7, 8, 9) pour le transport d'une première feuille et d'une deuxième feuille successivement d'une position d'arrivée à une deuxième position d'évacuation, la première feuille ayant un côté arrière et la deuxième feuille ayant un côté avant,
b) des moyens de positionnement (48a, 48a) pour le positionnement de la première feuille et de la deuxième feuille de façon telle que le côté arrière de la première feuille et le côté avant de la deuxième feuille se fassent face à une position voisine d'une position de coupe déterminée, ces moyens de positionnement étant placés entre la position d'arrivée et la position d'évacuation,
c) des moyens de coupe (3) pour la coupe sensiblement en même temps des parties de coin du côté arrière de la première feuille et des parties de coin du côté avant de la deuxième feuille.

13. Appareil selon la revendication 12, caractérisé en ce que les moyens de positionnement (48a, 48a) comprennent une butée (48) pour l'arrêt du côté arrière de la première feuille et du côté avant de la deuxième feuille, un moyen de déplacement (48) pour le déplacement de cette butée jusqu'à une position où le côté arrière de la première feuille et le côté avant de la deuxième feuille peuvent être mis en contact avec la butée et jusqu'à une autre position où le côté arrière de la première feuille et le côté avant de la deuxième feuille ne peuvent pas être mis en contact avec la butée, et un moyen de poussée (32) repoussant la première feuille vers la butée pour pousser le côté arrière de cette feuille contre la butée.

14. Appareil selon l'une des revendications 12 et 13, caractérisé en ce que chacune des première et deuxième feuilles a un côté avant et un côté arrière et a une partie de coin sur son côté avant et son côté arrière, et les moyens de coupe comprennent des moyens pour couper lesdites parties de coin.

15. Appareil selon l'une des revendications 12, 13 et 14, caractérisé en ce qu'il comprend en outre des moyens de formation de rainure (50) pour la formation d'une rainure (b) dans la première feuille et dans la deuxième feuille pour le pliage de ces feuilles grâce à cette rainure.

16. Appareil selon la revendication 15, caractérisé en ce que la rainure a une forme creuse et les moyens de formation de rainure (50) comprennent un élément saillant (50) de forme correspondant à la forme creuse de la rainure et un moyen d'enfoncement (52) enfonçant cet élément saillant dans la première feuille et dans la deuxième feuille.

17. Appareil selon l'une des revendications 12, 13, 14, 15 et 16, caractérisé en ce que les moyens de coupe (3) comprennent un élément coupant fixe (44, 44), un élément coupant mobile (46, 46) coupant par cisaillement en association avec l'élément coupant fixe ladite partie de la première feuille et une partie de la deuxième feuille, et un moyen d'actionnement (52) actionnant l'élément coupant mobile.

18. Appareil selon la revendication 17, caractérisé en ce qu'il comprend en outre un élément saillant (50) pour la formation d'une rainure (b) dans la première feuille et dans la deuxième feuille pour le pliage de ces feuilles grâce à cette rainure, et un élément de support (45, 51) supportant cet élément saillant et l'élément coupant mobile, cet élément de support étant propre à être actionné par le moyen d'actionnement.
